# EUROPEAN PATENT SPECIFICATION

(11) **EP 1 795 264 B1**
(45) Date of publication and mention of the grant of the patent: **22.08.2012**
(21) Application number: 06116699.7
(22) Date of filing: 06.07.2006
(51) Int. Cl.: B01L 3/02

(54) **Fluid repellant needle**
Flüssigkeitsabweisende Spitze
aiguille hydrofuge

(43) Date of publication of application: 13.06.2007
(73) Proprietor: Agilent Technologies, Inc., Santa Clara CA 95051 (US)
(72) Inventor: KRETZ, Wolfgang, 76337, Waldbronn (DE)
(74) Representative: Barth, Daniel Mathias

(56) References cited:
- WO-A-01/32310
- WO-A-01/72423
- WO-A-03/076075
- WO-A2-01/79422
- FR-A1- 2 874 841

## Description

The present invention relates to a needle for an analysis system.

Known analysis systems may handle fluidic samples, buffers, and rinsing fluids using hollow needles in which a fluid may be aspirated for transport to a destination. When handling multiple fluids with such a needle, contamination of the needle may occur and impurities may be introduced in containers holding such fluids or in other components of the analysis system.

US 2002/102185 discloses that the surface of a needle for collecting samples is coated with a coating material lower in chemical activity than a base metal of the needle. As a result, it is possible to obtain a practically sufficient antifouling effect even on contamination coming from chemical adsorption.

US 2005/217393 discloses an auto-sampler successively collecting liquid samples from plural sample containers through a metallic needle. A surface of the needle is coated with a coating material having a chemical activity smaller than that of a parent metal material of the needle, and the coated surface is polished.

WO 1993/25309 discloses a mixing and measuring needle manufactured by using electroformation. In the manufacture an elongate, needlelike aluminum mould is used, inside which is a duct which extends to a point of the mould. On the mould is precipitated electrolytically a layer of nickel cobalt. The thickness of the nickel cobalt layer is otherwise corresponding the wall thickness of the needle to be manufactured, but around the point part of the mould nickel cobalt is precipitated in an excess. After the precipitation step the expansion surrounding the point of the mould is tooled by first making to its point bevellings at an angle in relation to the longitudinal axis of the mould. Thereafter, borings perpendicular to the bevellings are drilled extending to the internal duct. At following stage, the rest of the expansion precipitated around the point part of the mould is removed, except the solid, conical point of the needle which is forming. At this stage the needle formed of the cobalt nickel layer is completely finished, except the aluminum mould which still is inside the layer, which mould is removed by leading inside the mould through the duct and borings hot lye. The final result is the mixing and measuring needle, where an electrolytically precipitated and tooled layer of cobalt nickel forms the tubular shaft of the needle, and the drilled borings form the discharge openings of the needle.

US 5,468,453 discloses a pipette probe design comprising a stainless steel barrel having an exterior coating of polytetrafluoroethylene. A contiguous length of polytetrafluoroethylene tubing runs coaxial within the barrel. The pipette probe is swaged at a fluid dispensing end to a restrictive diameter. An adhesive seal at the fluid dispensing end adheres the polytetrafluoroethylene tube to the barrel. Additionally, both the interior and the exterior of the tip is polytetrafluoroethylene coated so as to reduce fluid droplet formation in the first place.

WO 1999/51980 discloses a fluoropolymer-coated steel needle probe for an auto-sampler.

US2001/017060 discloses a temperature-adjusted sampler for liquids, gases or other fluids including a hollow needle in steel or another metal on which a heating is deposited so as to be electrically insulated, wherein the hollow needle is coated with an electrically insulating layer which has deposited thereon in complete intimate contact a thin, electrically conducting heating layer.

EP0718630 A1 discloses that the inside surface of a tube, particular cannula or hollow needle is rendered smooth by passing a liquid through which contains solid substances, mechanically treating the surface and being chemically aggressive in relation to the material of the tube. Grinding grains or balls of hard material may be used and the chemically aggressive liquid for stainless steel may be sulphuric acid, phosphoric acid or hydrochloric acid and may contain passivating agents. An anti-stick coating with a thickness in the nanometre range can be applied from a coating liquid after smoothing.

WO 01/79422 A2 discloses a spot picker head comprising a body and a projecting hollow needle, wherein substantially the whole of the exterior surface of said needle is provided with a hydrophobic coating such as Teflon^{™} (PTFE). The teaching of that document forms the preamble to claim 1.

### DISCLOSURE

It is an object of the invention to provide a needle which is appropriate for sample handling. The object is solved by the independent claims. Further embodiments are shown by the dependent claims.

According to an exemplary embodiment of the present invention, a needle (for instance any structure having a fluid channel) for handling a fluid in an analysis system is provided, the needle comprising a needle body (for instance made of a single component) having a fluid conduit (through which the fluid may be transported), and having a fluid repellant (particularly outer) surface portion (that is particularly an exterior surface which, when brought in contact with the fluid, does not allow significant amounts of the fluid to remain at the fluid repellant surface portion). The fluid repellant portion is formed by polishing this surface.

The polished surface portion has a roughness (Ra) of less than 100 nm, particularly a roughness of less than 50 nm, more particularly a roughness of less than 20 nm. It is also possible to have a roughness of less than 10 nm. The smaller the roughness, the smaller are the surface distortions of the fluid repellant surface, and therefore the larger are the improvements with regard to cross-contamination.

After polishing, a coating is deposited on a surface of the needle in order to further improve the surface properties. For example, roughness may further be reduced by such a coating, and/or the surface may be made biocompatible.

According to another exemplary embodiment, an analysis system (for example a (bio)chemical fluidic device) for analyzing a fluid (for example a liquid and/or a gas, which may additionally comprise solid components) is provided, the analysis system comprising a needle having the above-mentioned features for handling the fluid.

According to yet another exemplary embodiment, a method of manufacturing a needle for handling a fluid in an analysis system is provided, the method comprising providing a needle body (for instance made of a single component and) having a fluid conduit, and forming a fluid repellant (particularly outer) surface portion of the needle body.

The term "fluid repellant outer surface portion of the needle body" may particularly denote an exterior surface of the needle body or a surface of the needle which is surrounded by the material of the needle body. The term fluid repellant outer surface portion may particularly exclude an interior surface of the fluid conduit.

According to an exemplary embodiment, a fluid dispensing needle for an autosampler for handling one or more samples in a fluidic device may be provided. Such a needle may have a (for instance, essentially tubular) needle body which may be treated to have a fluid repellant property at an outer surface (that is a surface portion of the needle body which may be exposed to a fluidic environment, or which is surrounding the material of the needle body; in other words, such an outer surface may be located opposing the fluid conduit) and optionally an inner surface (that is a surface portion of the needle body defining walls of the fluid conduit). Such a fluid repellant portion may be, for instance, formed by providing microstructures (like small ribs or protrusions) on an exterior and/or interior surface so as to obtain a fluid repellant property by making use of the Lotus effect. The direct processing of the surface of the needle body without the necessity to provide a separate coating may allow for a simple manufacture of the needle. By equipping also the inner surface of the needle body with a fluid repellant property, an undesired diversion of the fluid and therefore a contamination may be securely prevented, particularly in combination with a fluid repellant property of the inner surface of the needle body. The inner surface may be polished by directing a solid particle comprising fluid through the fluid conduit.

Thus, a polished needle may be provided in which a cross-contamination during sampling of different fluidic samples may be efficiently prevented or suppressed by polishing the needle. Only optionally, the polished (or otherwise treated) needle may then be coated with a suitable material, for instance as a passivation or protection layer, to further increase the surface quality, or to avoid corrosion. It may be possible that the coating is so thin (for instance only several atomic layers) that the surface treatment of the needle has a direct impact on the surface properties of the coating, so that the surface of the coating is a "fingerprint" of the treated surface beneath.

With such a fluid repellant surface, it may be possible to immerse the needle even in a plurality of different samples without the occurrence of cross-contamination. In other words, it may be avoided that one sample is deteriorated by impurities from another sample which has been analyzed or sampled beforehand, and traces of which are still present on the needle surface.

For instance, the sample body may be made of a single component (for instance integrally formed). This component may be treated by polishing or providing it with structures designed and dimensioned to promote the Lotus effect.

However, also a "tube in tube" configuration is possible, in which one inner (for instance metal) tube is surrounded by another (for instance metal) tube, wherein the tubes may be connected to one another, for example, by welding or soldering. For example, an inner thin tube made of gold and an outer thicker tube made of stainless steel can be combined. After having brought the two tubes in contact with one another and after having connected them, it is possible to remove some material at the tip of the outer tube, thereby generating a conic geometry. Afterwards, the surface of the outer tube may be polished, so that a fluid repellent property may be obtained. However, as an alternative to such a "tube in tube" embodiment, it is also possible to integrally form the needle body of a single component.

Therefore, in order to reduce cross-contamination in an autosampler needle, a reduced needle surface roughness (for instance accomplished by polishing) may be used to provide a polished autosampler needle which reduces undesired carry over of fluidic material.

With the use of more sensitive detectors (especially mass spectrometers) in HPLC (high performance liquid chromatography) analysis, the requirement of sufficiently low cross-contamination becomes more and more important. Another field of application of embodiments of the invention is the use of HPLC in proteomics applications where sticking of proteins or peptides on surfaces may be problematic.

Contamination may take place during the sample pickup process when the needle dips into a vessel with the sample thus wetting the exterior and interior surface of the needle. If the needle dips now into the next sample vessel, cross-contamination may happen.

When changing from one sample to the next usually one or more rinse procedures are implemented. With these procedures, the majority of residues may be eliminated. In order to reduce their residue level below or close to the level of detection, additionally measures may be advantageous in order to provide a fluid repellant surface of a (for instance single component) needle body.

Besides coating, it is possible to reduce the surface roughness of the hollow metal injector needle (for instance SST) to a value below Ra=0.03 µm by an adequate process (for instance abrasive mechanical polishing, electrochemical polishing, electron beam polishing, etc.). Optionally, it is possible to coat the needle after polishing in order to cover iron crystals (for instance by DLC or modified DLC, a nanocomposite coating, etc.).

It is also possible to use the biocompatible needle material (like an appropriate titanium alloy or ceramics) to avoid affinity problems of samples to iron crystals of SST needles and add the above procedure(s) to reduce surface roughness.

Optionally, it is possible to perform a surface hardening procedure to improve the polishing process. Such a hardening procedure may be carried out before polishing or any other surface treatment improving the fluid repellant property.

In an autosampler apparatus, a plurality of samples may be stored in a plurality of containers, for instance glass containers. An autosampler needle may then aspirate fluid out of the containers in order to provide the fluid for an experiment, for instance a fluid separation or a fluid analysis experiment. Also fluid purification may be an exemplary field of applications. After having treated a sample with a needle, the latter may be cleaned and may then be dipped into the next sample. In order to avoid contamination between different samples, the needle may simply be polished, and optionally a subsequent coating procedure may be carried out. For example, a diamond-like carbon (DLC) coating or a coating with nanocomposite particles (for instance from the field of glass ceramics) may be carried out. Coating may be carried out with such a thin thickness that the coating layer may have the same or very similar surface properties of the below needle body. In other words, a topology of the polished needle body may be essentially followed by this coating layer, and the coating layer may even serve to further equilibrate a possibly remaining surface relief. As a material for the needle body, stainless steel (316L steel or 316 steel) may be used.

Such a needle may have an essentially hollow cylindrical section having an outer diameter of 1.2 mm, respectively 1.6 mm, and an inner fluid conduit diameter of 0.13 mm to 0.8 mm. At a fluid outlet end portion of the needle body, such a tip may be shaped, for example, in a conic manner, to taper towards the fluid outlet.

A cold-drawn needle may be treated (for instance by applying an abrasive method) so as to be shaped conically at an end portion. At such a tip it is possible to additionally increase the rounding property of the tip. Then, an optional hardening procedure may be carried out. Hardened materials may be better suitable for further processing. For hardening, kolsterization of a surface near portion of for instance 30 µm may be carried out. Then, the cylindrical and/or the conical portion(s) of the needle may be additionally polished. More generally, the surface may be treated so that any fluidic sample may be prevented from adhering to the surface of the needle. This may be achieved, for instance, by polishing or by providing surface structures so as to promote the Lotus effect.

The deposition of the coating layer may include a CVD (chemical vapor deposition) coating, a PECVD (plasma enhanced chemical vapor deposition) coating, a PVD (physical vapor deposition) coating, a galvanic coating, a currentless coating, an electroless coating, etc. Also coating by dipping the treated needle body in an immersion bath is possible. Exemplary coating materials are DLC, nanocomposite materials, platinum, palladium , rhodium, gold, etc.

As a material for the needle body, stainless steel, titanium, tantalum, cobalt/nickel alloy, gold, platinum, ceramics (which may be biocompatible), plastics (like PEEK), etc. may be used. Particularly suitable as a material for the needle body may be essentially iron-free titanium since this may be biocompatible and may be properly polishable.

Particularly, when polishing the surface of the needle body, the surface roughness may be reduced to less than 50 nm, preferably between 10 nm and 20 nm, or even less.

Exemplary fields of application of exemplary embodiments of the invention are HPLC autosamplers, fraction collectors, and capillary electrophoresis devices. More generally, embodiments may be used for any analysis devices, particularly in the field of life science.

Next, further exemplary embodiments of the needle will be explained. However, these embodiments also apply for the analysis system and for the method of manufacturing a needle.

The needle body may be made of a single component. In other words, only a single (for example tubular) substrate may be used which has an outer surface which may be as fluid repellant as possible, and which may have an internal fluid conduit. By providing the needle body as a single component, the fluid transporting properties and the external fluid repellant properties may be combined synergetically in a single component, thereby allowing to manufacture the needle with low cost.

The fluid repellant surface portion may have a microstructure in accordance with the Lotus effect. By providing microstructures with special dimensions, the fluid repellant property as known from the Lotus plant may be used.

Alternatively, the fluid repellant surface portion may be a polished surface portion of the needle body. Therefore, it is also possible to reduce or minimize surface roughness or to eliminate other surface distortions so as to obtain a fluid repellant property by polishing.

The coating may be very thin and may further improve the surface properties, since the coating material can be adjusted in proper accordance with specific requirements, for instance biocompatibility. Such a coating may further reduce the surface roughness.

The coating may comprise, for example, at least one material of the group consisting of a diamond-like carbon coating (DLC), a nanocomposition coating, a ceramic coating, a Teflon coating, a platinum coating, a palladium coating, a rhodium coating or a passivation coating as described, for example, in US 6444326, US 6511760 and WO00/51732 A1. However, a number of other alternative coatings is possible.

The coating may have a thickness being sufficiently small that the fluid repellant surface portion of the needle body has a significant effect on the surface properties of the coating. If this is the case, then the improved surface repellant properties may be transferred via the thin (for instance nm to µm) thick coating onto the surface of the entire needle.

The needle body may have a tubular portion and a tapered tip portion. It is possible that the tapered tip portion is tapered with a constant gradient or with a varying gradient, for instance with a parabolic or a hyperbolic shape. The tip portion may or may not be rounded. The tubular portion may have a hollow cylindrical structure, that is to say a circular shape, or may be rectangular, or the like. It may also be curved.

The tubular portion and the tapered tip portion may both have the fluid repellant surface property. In other words, the entire portion of the needle which is foreseen be immersed into a fluid container during normal use may be provided with the material repellant surface property.

The needle body may be made of a single material, that is particularly may be integrally formed. This may allow to manufacture the needle with small effort. However, even in an embodiment in which the needle body is made of a single material like stainless steel, it may happen that traces of other materials are contained in the needle body.

The needle may comprise a fitting to be connected to the needle body for coupling the needle to an autosampler. Such a fitting may be any mechanical connection structure which allows to couple the needle to the autosampler in a sufficiently sealed manner, so that sample material does not leak between the fitting and the needle body. An autosampler may be denoted as a device for supplying one or a plurality of samples to an analysis system.

The needle may comprise a fitting to be connected to the needle body for coupling the needle body to a fractioner. A fractioner may be denoted as a portion of an analysis device at which different components of a separated fluidic sample are further treated by such a fractioner, for instance filled in different containers or analyzed separately.

Therefore, the needle may be implemented in an analysis system for use in an early phase during fluid analysis (for instance in an autosampler for supplying a sample) and/or for use in a late phase during fluid analysis (for instance in a fraction collector for post-treating already separated components).

The needle may be adapted for a fluid communication with at least one fluid container. However, the needle may also be operated in a system having a plurality of different fluids, like sample, mobile phase, buffer, waste, etc.

The needle body may comprise at least one material of the group consisting of a ceramic, a plastic (like PEEK), , a stainless steel, cobalt/nickel alloy, iron-free titanium, tantalum, and gold. A preferred material may be iron-free titanium since it may improve, due to its surface properties, the fluid repellant feature.

The needle body may be a cold-drawn needle body. This may allow to manufacturing the needle body with low cost.

In the following, further exemplary embodiments of the analysis system will be explained. However, these embodiments also apply for the needle and for the method of manufacturing a needle.

The analysis system may be adapted as at least one of the group consisting of an autosampler device, a fraction collector device, a measurement device for performing a measurement in a coupled measurement environment, a measurement device for measuring at least one physical, chemical or biological parameter, a sensor device, a device for chemical, biological and/or pharmaceutical analysis, a fluid separation system adapted for separating components of a fluid, a test device for testing a device under test or a substance, a capillary electrophoresis device, a liquid chromatography device, a gas chromatography device, an electronic measurement device, and a mass spectroscopy device. More generally, the analysis system may be implemented in each field in which the secure handling of a sample is desired, particularly in the field of life science. An exemplary field of application is an autosampler for a HPLC (high performance liquid chromatography apparatus).

The analysis system may be adapted as a fluid separation system for separating components of a fluidic sample. Such a fluid separating system may be a liquid chromatography apparatus, an electrophoresis device, etc.

The analysis system may also be adapted as a fluid purification system for purifying a fluidic sample. For biochemical analysis, it may happen that a fluidic sample may comprise a plurality of different components. Then, the analysis system may perform a purification so as to concentrate or isolate a particular species or fraction of the sample.

The analysis system may be adapted to analyze at least one physical, chemical and/or biological parameter of a fluidic sample. The term "physical parameter" may particularly denote a temperature, a pressure, or the like. The term "chemical parameter" may denote a concentration or a material property of the sample. The term "biological parameter" may indicate for example a biochemical affinity, a biological activity, etc.

The analysis system may be adapted as a fluidic device, more particularly as a microfluidic device. The term "microfluidic device" may particularly denote any device in which a fluidic sample is analyzed, having dimensions in the order of magnitude of µm. Alternatively, the analysis system may be adapted as a nanofluidic device. The term "nanofluidic device" may particularly denote a device which comprises structures in the order of magnitude of nm.

In the following, further exemplary embodiments of the method of manufacturing a needle will be explained. However, these embodiments also apply for the needle and for the analysis system.

Forming the fluid repellant surface portion of the needle body may comprise polishing the needle body. Such a polishing may be performed mechanically, electrically or by an electron beam. Other polishing procedures are possible.

A (for instance very thin) coating layer is deposited on the fluid repellant surface portion of the needle body. Such a deposition may be performed using any suitable method, for instance using ALD (Atomic Layer Deposition) allowing to control the thickness of the coating with high accuracy of up to one atomic layer. Other deposition methods like CVD, PECVD, PVD, sputtering, etc. are possible. Particularly, the depositing procedure may be a currentless deposition technique, a galvanic deposition, or a dipping or immersion deposition.

After deposition, the coating may be polished as well. In other words, according to such an embodiment, two polishing procedures are performed, one for polishing the (for instance metallic) needle body, and one for polishing the (for instance biocompatible) coating.

The needle body may be provided with a tubular shape (for instance as a hollow cylinder). Then, a tapered tip portion may be formed at an end portion of the needle body. Such a tapering geometry may further improve the fluid repellant properties. The tapered tip portion may be formed by abrading, grinding, or rounding. However, other procedures are possible.

Beyond this, the method may comprise hardening the needle body before forming the fluid repellant surface portion, thereby conditioning or preparing the needle body for a subsequent fluid repellant surface generation procedure. Hardening may be performed, for example, by precipitation hardening or kolsterizing the needle body.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 to Fig. 5 illustrate different structures obtained when carrying out a method of manufacturing a needle according to an exemplary embodiment.

Fig. 6 illustrates an analysis system comprising a needle according to an exemplary embodiment.

The illustration in the drawing is schematically.

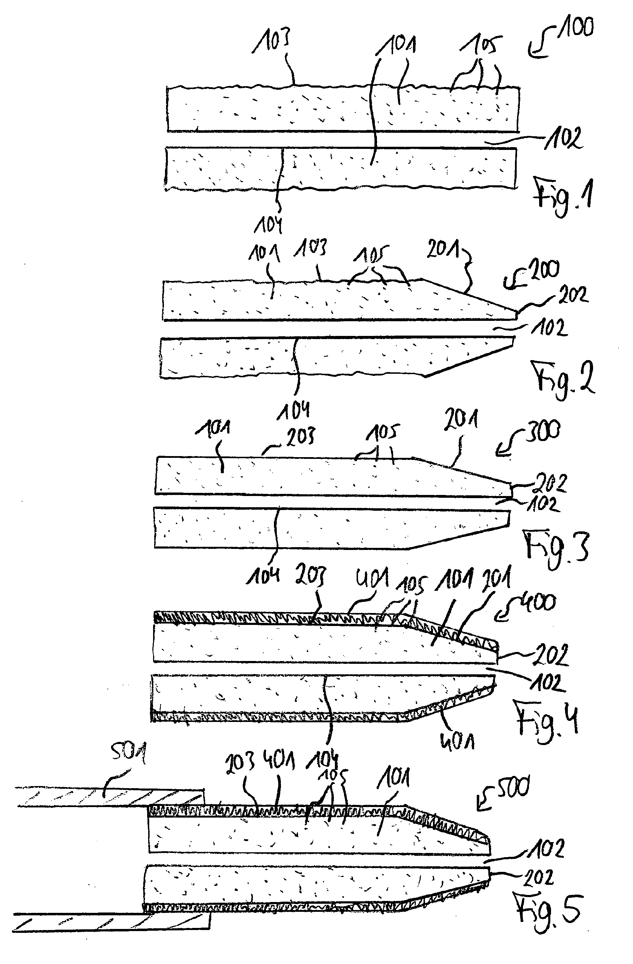

In the following, referring to the cross sectional views of Fig. 1 to Fig. 5, a method of manufacturing a needle 500 (see Fig. 5) for handling a fluid in a HPLC (high performance liquid chromatography) autosampler according to an exemplary embodiment of the invention will be explained.

**Fig. 1** shows a pre-form 100 of the needle 500.

More particularly, Fig. 1 shows a needle body 101 consisting of a stainless steel material. The needle body 101 is shaped as a tubular hollow cylinder which has a central fluid conduit 102 having a circular cross section and being adapted for transporting a fluid. For transporting the fluid, a pressure may be applied to the fluid conduit 102, for example by a pump.

As can be taken from Fig. 1, the needle body 101 has a rough outer surface 103, and has an inner surface 104. The needle body 101 shown in Fig. 1 has been manufactured by hardening the stainless steel needle body 101 by introducing particles 105 particularly close to the outer surface 103 of the needle body 101. Such a hardening may be performed by kolsterizing the needle body 101.

**Fig. 2** shows a structure 200 obtained during manufacture of the needle 500.

The structure 200 can be obtained by grinding or applying another abrasive procedure so as to form a tapered tip portion 201. Although not shown in Fig. 2, a fluid outlet end portion 202 of the device 200 can be rounded by a separate procedure so as to further improve the fluid outlet properties.

In order to obtain the structure 300 shown in **Fig. 3**, the tubular section, that is to say the remaining outer surface 103 as well as the tapered tip portion 201 are polished, for instance by a mechanical polishing method. By taking this measure, a smooth polished fluid repellant surface portion 203 is obtained. Optionally, it is also possible to polish the inner surface 104, to further improve the fluid transport characteristic through the fluid conduit 102.

The structure 300 can already be considered as a needle according to an exemplary embodiment of the invention. However, in the described scenario, the structure 300 is further treated, as will be described in the following.

**Fig. 4** shows a structure 400 which is obtained by depositing a coating layer 401 on the polished surface 203. The coating 401 is e.g. a diamond-like carbon (DLC) coating.

**Fig. 5** shows the needle 500 for handling a fluid in a HPLC autosampler and comprises the needle body 101 made of stainless steel, having the fluid conduit 102, and having the fluid repellant surface portion 203. Since the thickness of the coating 401 is very small (in the order of magnitude of µm to nm), the fluid repellant properties of the surface portion 203 may be at least partially transferred to fluid repellant properties of an exterior surface of the coating 401.

Furthermore, a fitting element 501 has been connected in a sealed manner to the needle 500.

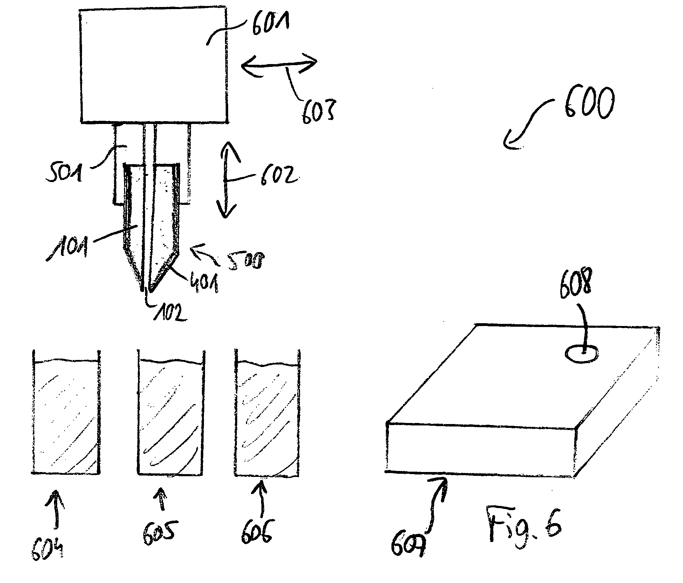

In the following, referring to **Fig. 6**, an analysis system 600 will be explained comprising the needle 500 according to an exemplary embodiment.

The needle 500 is mounted via the fitting 501 on a robot 601 for moving the mounted needle 500 in a vertical direction 602 and/or in a horizontal direction 603. Thus, the needle 500 may be moved between first to third containers 604 to 606 each accommodating a fluid on the one hand, and a fluidic chip device 607 comprising an injection hole 608 in which fluid may be inserted by the needle 500 on the other hand. This fluid has been sucked from one of the containers 604 to 606 in the conduit 102 of the needle 500.

Due to the fluid repellant property of the needle 500, essentially no contamination occurs even when the needle 500 is dipped in different ones of the containers 604 to 606.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A needle (500) for handling a fluid in an analysis system (600), the needle (500) comprising
a needle body (101) having a fluid conduit (102), and a fluid repellant outer surface portion (203),
**characterized by** a coating (401) provided on the fluid repellant outer surface portion (203) of the needle body (101),
wherein the fluid repellant outer surface portion (203) is a polished surface portion of the needle body (101), and
the polished surface portion (203) has a roughness of less than 100 nm and is uncoated when being polished.

2. The needle (500) of claim 1,
wherein the fluid repellant outer surface portion (203) has a microstructure in accordance with the Lotus effect.

3. The needle (500) of claim 1,
wherein the polished surface portion (203) has a roughness of less than 50 nm, more particularly a roughness of less than 20 nm.

4. The needle (500) of the preceding claim, comprising at least one of the following:
the coating (401) comprises at least one material of the group consisting of a diamond-like carbon coating, a nanocomposite coating, a ceramic coating, a Teflon coating, a platinum coating, a palladium coating, a rhodium coating, and a passivation coating;
the coating (401) has a thickness being sufficiently small that the fluid repellant outer surface portion (203) of the needle body (101) has an effect on the surface properties of the coating (401).

5. The needle (500) of claim 1 or any one of the above claims, wherein
the needle (500) comprises a fitting (501) to be connected to the needle body (101) for coupling the needle (500) to one of an autosampler and a fractioner.

6. The needle (500) of claim 1 or any one of the above claims, comprising at least one of the following:
the needle body (101) comprises at least one material of the group consisting of a ceramic, a plastic, a stainless steel, a cobalt/nickel alloy, iron-free titanium, tantalum, and gold;
the needle body (101) is a cold-drawn needle body.

7. An analysis system (600) for analyzing a fluid, the analysis system (600) comprising
a needle (500) of claim 1 or any one of the above claims for handling the fluid.

8. A method of manufacturing a needle (500) for handling a fluid in an analysis system (600), the method comprising
providing a needle body (101) having a fluid conduit (102);
forming a fluid repellant outer surface portion (203) of the needle body (101) by polishing the needle body (101), wherein the polished surface portion (203) has a roughness of less than 100 nm and is uncoated when being polished, and
depositing a coating (401) on the fluid repellant outer surface portion (203) of the needle body (101);

9. The method of the preceding claim, wherein
polishing comprises at least one of the group consisting of mechanically polishing, electropolishing, and electron beam polishing.

10. The method of claim 8 or 9, wherein depositing the coating (401) comprises at least one of
a currentless deposition;
a galvanic deposition;
chemical vapor deposition;
plasma enhanced chemical vapor deposition;
physical vapor deposition, immersion coating, and sputtering;
polishing the coating (401) after deposition.

## Patentansprüche

1. Kanüle (500) zum Handhaben eines Fluids in einem Analysesystem (600), wobei die Kanüle (500) Folgendes aufweist:
einen Kanülenkörper (101) mit einer Fluidleitung (102) und einem flüssigkeitsabweisenden äußeren Oberflächenteil (203),
**gekennzeichnet durch** eine Beschichtung (401), die auf den flüssigkeitsabweisenden äußeren Oberflächenteil (203) des Kanülenkörpers (101) aufgebracht ist,
wobei es sich bei dem flüssigkeitsabweisenden äußeren Oberflächenteil (203) um einen polierten Oberflächenteil des Kanülenkörpers (101) handelt, und
der polierte Oberflächenteil (203) eine Rauigkeit von weniger als 100 nm aufweist und beim Polieren unbeschichtet ist.

2. Kanüle (500) nach Anspruch 1,
wobei der flüssigkeitsabweisende äußere Oberflächenteil (203) eine Mikrostruktur gemäß dem Lotoseffekt aufweist.

3. Kanüle (500) nach Anspruch 1,
wobei der polierte Oberflächenteil (203) eine Rauigkeit von weniger als 50 nm, insbesondere eine Rauigkeit von weniger als 20 nm, aufweist.

4. Kanüle (500) nach dem vorhergehenden Anspruch, die mindestens eines der folgenden Merkmale aufweist:
die Beschichtung (401) weist mindestens einen der folgenden Werkstoffe auf: eine diamantartige Beschichtung, eine Verbundbeschichtung mit Nanostruktur, eine keramische Beschichtung, eine Teflonbeschichtung, eine Platinbeschichtung, eine Palladiumbeschichtung, eine Rhodiumbeschichtung und eine Passivierungsbeschichtung;
die Beschichtung (401) weist eine hinreichend geringe Schichtdicke auf, damit sich der flüssigkeitsabweisende äußere Oberflächenteil (203) des Kanülenkörpers (101) auf die Oberflächeneigenschaften der Beschichtung (401) auswirkt.

5. Kanüle (500) nach Anspruch 1 oder einem der vorhergehenden Ansprüche, wobei
die Kanüle (500) ein Anschlussstück (501) aufweist, das mit dem Kanülenkörper (101) verbunden sein muss, um die Kanüle (500) mit einem automatischen Probennehmer oder einem Phasentrenner zu verbinden.

6. Kanüle (500) nach Anspruch 1 oder einem der vorhergehenden Ansprüche, die mindestens eines der folgenden Merkmale aufweist:
der Kanülenkörper (101) weist mindestens einen der folgenden Werkstoffe auf: eine Keramik, einen Kunststoff, einen Edelstahl, eine Cobalt/Nickellegierung, eisenfreies Titan, Tantal oder Gold;
beim Kanülenkörper (101) handelt es sich um einen kaltgezogenen Kanülenkörper.

7. Analysesystem (600) zum Analysieren eines Fluids, wobei das Analysesystem (600) Folgendes aufweist:
eine Kanüle (500) nach Anspruch 1 oder einem der vorhergehenden Ansprüche zum Handhaben des Fluids.

8. Verfahren zum Herstellen einer Kanüle (500) zum Handhaben eines Fluids in einem Analysesystem (600), wobei das Verfahren die folgenden Schritte aufweist:
Bereitstellen eines Kanülenkörpers (101) mit einer Fluidleitung (102);
Bilden eines flüssigkeitsabweisenden äußeren Oberflächenteils (203) des Kanülenkörpers (101) durch Polieren des Kanülenkörpers (101, wobei der polierte Oberflächenteil (203) eine Rauigkeit von weniger als 100 nm aufweist und beim Polieren ungeschichtet ist, und
Abscheiden einer Beschichtung (401) auf dem flüssigkeitsabweisenden äußeren Oberflächenteil (203) des Kanülenkörpers (101).

9. Verfahren nach dem vorhergehenden Anspruch, wobei
das Polieren mindestens eines der folgenden Bearbeitungsverfahren aufweist: mechanisches Polieren, elektrolytisches Polieren und Elektronenstrahlpolieren.

10. Verfahren nach Anspruch 8 oder 9, wobei das Abscheiden der Beschichtung (401) mindestens einen der folgenden Prozesse aufweist:
stromloses Abscheiden;
galvanisches Abscheiden;
chemische Dampfabscheidung;
plasmagestützte chemische Dampfabscheidung;
physikalische Dampfabscheidung, Tauchbeschichtung und Sputtern;
Polieren der Beschichtung (401) nach dem Abscheiden.

## Revendications

1. Aiguille (500) pour manipuler un fluide dans un système d'analyse (600), l'aiguille (500) comprenant
un corps d'aiguille (101) comportant un conduit de fluide (102) et une partie de surface externe hydrofuge (203) ;
**caractérisée par** un revêtement (401) déposé sur la partie de surface externe hydrofuge (203) du corps de l'aiguille (101) ;
dans laquelle la partie de surface externe hydrofuge (203) est une partie de surface polie du corps de l'aiguille (101), et
la partie de surface polie (203) présente une rugosité inférieure à 100 nm et dont le revêtement est éliminé lorsqu'elle est polie.

2. Aiguille (500) suivant la revendication 1,
dans laquelle la partie de surface externe hydrofuge (203) comporte une microstructure conforme à l'effet lotus.

3. Aiguille (500) suivant la revendication 1,
dans laquelle la partie de surface polie (203) présente une rugosité inférieure à 50 nm, plus particulièrement une rugosité inférieure à 20 nm.

4. Aiguille (500) suivant la revendication précédente, comprenant au moins une des particularités suivantes :
le revêtement (401) comprend au moins un matériau choisi parmi le groupe comprenant un revêtement carbone sous forme de diamant amorphe, un revêtement nanocomposite, un revêtement céramique, un revêtement de téflon, un revêtement de platine, un revêtement de palladium, un revêtement de rhodium et un revêtement de passivation ;
le revêtement (401) présente une épaisseur suffisamment petite pour que la partie de surface externe hydrofuge (203) du corps de l'aiguille (101) ait un effet sur les propriétés de surface du revêtement (401).

5. Aiguille (500) suivant la revendication 1 ou l'une quelconque des revendications précédentes, dans laquelle :
l'aiguille (500) comprend un raccord (501) à connecter au corps de l'aiguille (101) pour relier l'aiguille (500) à un autoéchantillonneur ou à un fractionneur.

6. Aiguille (500) suivant la revendication 1 ou l'une quelconque des revendications précédentes, comprenant au moins une des particularités suivantes :
le corps de l'aiguille (101) comprend au moins un matériau choisi parmi le groupe comprenant une céramique, un plastique, un acier inoxydable, un alliage de cobalt/nickel, du titane dépourvu de fer, le tantale et l'or ;
le corps de l'aiguille (101) est un corps d'aiguille étiré à froid.

7. Système d'analyse (600) pour analyser un fluide, le système d'analyse (600) comprenant
une aiguille (500) suivant la revendication 1 ou l'une quelconque des revendications précédentes pour manipuler le fluide.

8. Procédé de fabrication d'une aiguille (500) pour manipuler un fluide dans un système d'analyse (600), le procédé comprenant
la fourniture d'un corps d'aiguille (101) comportant un conduit de fluide (102) ;
la formation d'une partie de surface externe hydrofuge (203) du corps de l'aiguille (101) en polissant le corps de l'aiguille (101), dans lequel la partie de surface polie (203) présente une rugosité inférieure à 100 nm et dont le revêtement est éliminé lorsqu'elle est polie, et
le dépôt d'un revêtement (401) sur la partie de surface externe hydrofuge (203) du corps de l'aiguille (101).

9. Procédé suivant la revendication précédente, dans lequel
le polissage comprend au moins un procédé choisi parmi le groupe comprenant un polissage mécanique, un polissage électrolytique et un polissage par faisceau d'électrons.

10. Procédé suivant la revendication 8 ou 9, dans lequel le dépôt du revêtement (401) comprend au moins un procédé choisi parmi le groupe comprenant
un dépôt sans courant ;
un dépôt galvanique ;
un dépôt chimique en phase vapeur ;
un dépôt chimique en phase vapeur assisté par plasma ;
un dépôt physique en phase vapeur, un revêtement par immersion et une pulvérisation ;
le polissage du revêtement (401) après dépôt.
